(19) Europäisches Patentamt
European Patent Office
Office européen des brevets

(11) EP 3 150 268 A1

(12) EUROPEAN PATENT APPLICATION
published in accordance with Art. 153(4) EPC

(43) Date of publication:
05.04.2017 Bulletin 2017/14

(51) Int Cl.:
B01D 39/20 (2006.01)     B01D 53/86 (2006.01)
B01D 53/90 (2006.01)     B01J 29/40 (2006.01)
B01J 35/04 (2006.01)     C04B 38/00 (2006.01)
C04B 41/89 (2006.01)     F01N 3/02 (2006.01)
F01N 3/022 (2006.01)

(21) Application number: 15798710.8

(22) Date of filing: 29.05.2015

(86) International application number:
PCT/JP2015/065666

(87) International publication number:
WO 2015/182773 (03.12.2015 Gazette 2015/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 30.05.2014 JP 2014113056

(71) Applicant: Sumitomo Chemical Company Limited
Tokyo 104-8260 (JP)

(72) Inventors:
• KURODA Tomoya
  Niihama-shi
  Ehime 792-8521 (JP)
• ANO Yusuke
  Niihama-shi
  Ehime 792-8521 (JP)
• NAITO Shota
  Tsukuba-shi
  Ibaraki 300-3294 (JP)

(74) Representative: Vossius & Partner
Patentanwälte Rechtsanwälte mbB
Siebertstrasse 3
81675 München (DE)

(54) **HONEYCOMB FILTER INTERMEDIATE, HONEYCOMB FILTER, AND PROCESSES FOR PRODUCING SAID INTERMEDIATE AND SAID FILTER**

(57) A process for producing a honeycomb filter intermediate comprises a step of applying an undercoating agent to a ceramic honeycomb structure. The undercoating agent is an emulsion containing a liquid and an organic polymer dispersoid dispersed in the liquid and having an average particle size of 0.1 to 0.8 μm. In a process for producing a honeycomb filter, a catalyst or a catalyst supporting agent is caused to be supported on a surface of a structure of a ceramic honeycomb intermediate.

Fig.2

**Description**

**Technical Field**

The present invention relates to a honeycomb filter intermediate, a honeycomb filter, and processes for producing these.

**Background Art**

A ceramic honeycomb filter designated as a DPF has been conventionally known as a filter for an engine exhaust gas. Such a ceramic filter has a microcrack, and because of the presence of this microcrack, its coefficient of thermal expansion is suppressed to be low. If a catalyst coating liquid containing a catalyst and a catalyst supporting agent is applied to such a ceramic filter to cause an inorganic catalyst to be supported thereon, however, the catalyst and the catalyst supporting agent are supplied into the microcrack and hence the microcrack disappears, and thus, the effect of lowering the coefficient of thermal expansion owing to the microcrack is reduced.

As a solution to this problem, a method in which a microcrack is stoppered by applying, before applying a catalyst coating liquid, an emulsion containing an organic polymer dispersoid to the surface of the ceramic filter has been disclosed.

**Citation List**

**Patent Literature**

Patent Literature 1: Japanese Unexamined Patent Publication No. 2009-513338

**Summary of Invention**

**Technical Problem**

Even if the conventional method is employed, however, increase in the coefficient of thermal expansion of the ceramic filter after supporting the catalyst from that before supporting the catalyst is not sufficiently inhibited.

The present invention was devised in consideration of the aforementioned problem, and an object is to provide a process for producing a honeycomb filter by which increase in the coefficient of thermal expansion of a ceramic filter after supporting a catalyst can be suppressed, and the like.

**Solution to Problem**

The process for producing a honeycomb filter intermediate according to the present invention comprises a step of applying an undercoating agent to a ceramic honeycomb structure. The undercoating agent is an emulsion containing a liquid and an organic polymer dispersoid dispersed in the liquid and having an average particle size of 0.1 to 0.8 $\mu$m. The average particle size of the organic polymer dispersoid is preferably 0.1 to 0.4 $\mu$m, and more preferably 0.1 to 0.2 $\mu$m.

According to the present invention, a microcrack of the ceramic honeycomb structure is suitably filled with an organic polymer. Accordingly, even if the honeycomb filter intermediate is coated with a catalyst or a catalyst supporting agent thereafter, the microcrack can be inhibited from being filled with a particle of the catalyst or the catalyst supporting agent.

Here, the organic polymer dispersoid can be a rubber, or alternatively, the organic polymer dispersoid can be an acrylic resin.

Besides, a zeta potential of the organic polymer dispersoid in the emulsion can be negative.

The honeycomb filter intermediate according to the present invention comprises: a ceramic honeycomb structure; and an organic polymer held on a surface of the ceramic honeycomb structure.

A part of the organic polymer is present in a microcrack of the ceramic honeycomb structure, and the organic polymer is a rubber or an acrylic resin.

When this honeycomb filter intermediate is used to support a catalyst thereon, increase in the coefficient of thermal expansion of a ceramic filter after supporting the catalyst can be suppressed.

Here, four-point bending strength of the honeycomb filter intermediate can be 0.70 MPa or more.

Also when this honeycomb filter intermediate is used to support a catalyst thereon, increase in the coefficient of thermal expansion of a ceramic filter obtained after supporting the catalyst can be suppressed.

In the aforementioned two honeycomb filter intermediates, an amount of the organic polymer can be 1 to 20 g per apparent unit volume of 1 L of the ceramic honeycomb structure.

Besides, the ceramic honeycomb structure can contain an aluminum titanate-based ceramic.

The process for producing a honeycomb filter according to the present invention comprises: a step of causing a catalyst and/or a catalyst supporting agent to be supported on a surface of the ceramic honeycomb structure of the aforementioned ceramic honeycomb intermediate; and a step of removing the organic polymer from the surface of the ceramic honeycomb structure by heating the honeycomb filter.

The honeycomb filter according to the present invention comprises a ceramic honeycomb structure containing an aluminum titanate-based ceramic; and a catalyst and/or a catalyst supporting agent supported on a surface of the ceramic honeycomb structure. A coefficient of thermal expansion of the honeycomb filter is 3.0 x 10$^{-6}$/K or less.

Here, the aluminum titanate-based ceramic can be represented by the following composition formula:

$$Al_{2(1-x)}Mg_xTi_{(1+y)}O_{5-2x+2y}$$

wherein x satisfies 0 < x < 1, and y satisfies 0.5x < y < 3x.

**Advantageous Effects of Invention**

According to the present invention, increase in the coefficient of thermal expansion of a ceramic filter after supporting a catalyst can be suppressed.

**Brief Description of Drawings**

[Figure 1] Figure 1 is a schematic cross-sectional view of a ceramic honeycomb structure.

[Figure 2] Figure 2 is a schematic cross-sectional view illustrating a step of applying an undercoating agent to a surface of the ceramic honeycomb structure.

[Figure 3] Figure 3 is a schematic cross-sectional view illustrating a process following that of Figure 2 in the step of applying the undercoating agent to the surface of the ceramic honeycomb structure.

[Figure 4] Figure 4 is a schematic cross-sectional view illustrating a step of supporting a catalyst on a surface of a honeycomb filter intermediate.

[Figure 5] Figure 5 is a schematic cross-sectional view illustrating a step of removing an organic polymer from the honeycomb filter intermediate.

[Figure 6] Figure 6 is a schematic cross-sectional view of a honeycomb filter on which a catalyst layer is supported.

[Figure 7] Figure 7 is a graph illustrating pore size distributions in a ceramic honeycomb structure of Comparative Example 3 and honeycomb filter intermediates of Examples 1A to 1C.

[Figure 8] Figure 8 is a graph illustrating zeta potentials of PVA, aluminum magnesium titanate, a polyacrylate dispersoid, an SBR dispersoid and Y-type zeolite, all dispersed or dissolved in water.

**Description of Embodiments**

An embodiment of the present invention will now be described with reference to the drawings.

(Process for Producing Honeycomb Filter Intermediate)

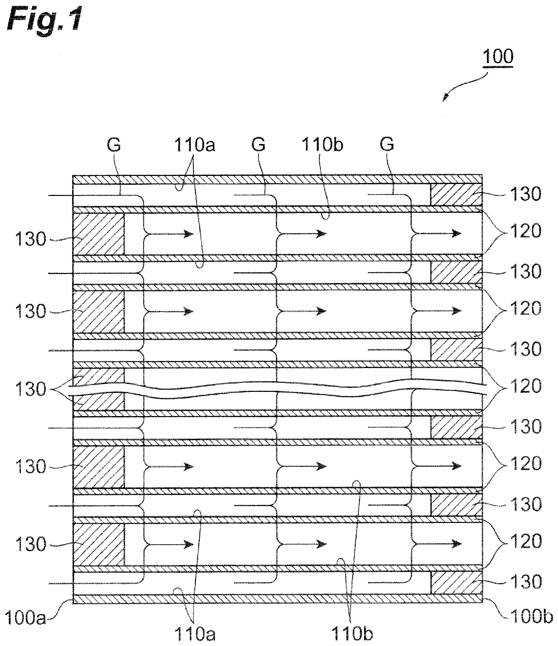

First, a porous ceramic honeycomb structure 100 as illustrated in Figure 1 is prepared. The ceramic honeycomb structure 100 has a column shape, and has an inlet end face 100a and an outlet end face 100b.

The ceramic honeycomb structure 100 has a partition wall 120 and a closing portion 130, and the partition wall 120 has a plurality of inlet channels 110a and a plurality of outlet channels 110b. The cross-section of each of the inlet channels 110a and the outlet channels 110b can be in the shape of, for example, a circle, an ellipse, a rectangle, a hexagon, or an octagon.

Each inlet channel 110a is opened on the inlet end face 100a, and is closed on the outlet end face 100b. Besides, each outlet channel 110b is opened on the outlet end face 100b, and is closed on the inlet end face 100a. In Figure 1, although the inlet channels 110a and the outlet channels 110b are closed by the closing portions 130 each in the shape of a plug, these channels can be closed by deforming walls of the honeycomb structure 10.

Examples of the ceramic include aluminum titanate-based ceramics, silicon carbide-based ceramics and cordierite-based ceramics.

Among these, the ceramic is preferably an aluminum titanate-based ceramic. The aluminum titanate-based ceramic can contain magnesium, silicon or the like.

In particular, the aluminum titanate-based ceramic is preferably represented by $Al_{2(1-x)}Mg_xTi_{(1+y)}O_{5-2x+2y}$ (wherein x satisfies $0 < x < 1$, and y satisfies $0.5x < y < 3x$). Here, the aluminum titanate-based ceramic satisfies preferably $0.03 \leq x \leq 0.5$, and more preferably $0.05 \leq x \leq 0.2$. Besides, the aluminum titanate-based ceramic satisfies preferably $0.5x < y < 2x$, and more preferably $0.7x < y < 2x$. The ceramic can contain a trace component derived from a raw material or a trace component unavoidably involved in the production process.

A porosity of the ceramic honeycomb structure before undercoating can be 50 to 75%. For retaining pressure drop performance and improving catalyst activity, the porosity is preferably 55 to 70%, and more preferably 55 to 65%. If the porosity exceeds 75%, the strength of the honeycomb filter may be lowered in some cases.

A cell density can be, for example, 35 to 80 cells/cm$^2$.

Such a ceramic honeycomb structure can be obtained, for example, by mixing a ceramic raw material, an organic binder, a pore-forming agent, a solvent, and an additive added if necessary, and molding, burning, sintering and then closing the resultant.

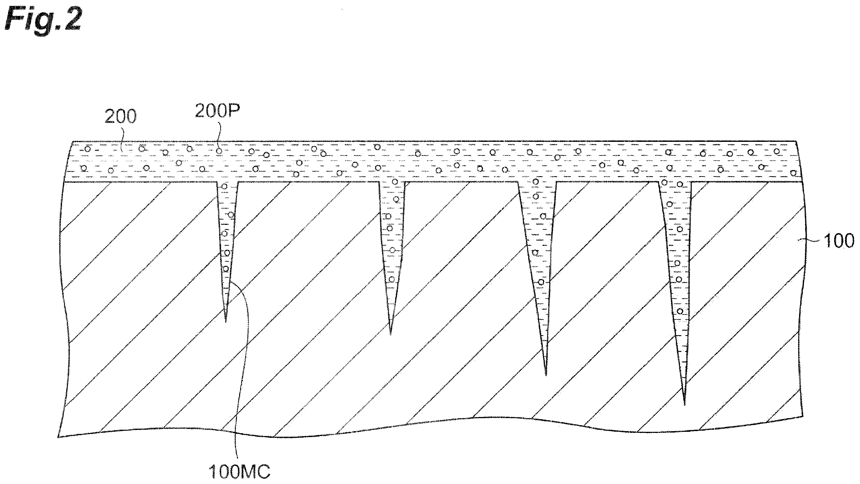

As illustrated in Figure 2, a microcrack 100MC is present on the surface of each channel or a pore of the ceramic honeycomb structure 100. Because of the presence of the microcrack 100MC, the coefficient of thermal expansion of the ceramic honeycomb structure is lowered. The microcrack 100MC is considered to have a width of 0.1 to 2 $\mu$m, and of 0.5 $\mu$m on average. It is noted that Figure 2 is an enlarged view of the surface of the ceramic honeycomb structure 100, and the illustrated surface can mean a surface of the inlet channel 110a or the outlet channel 110b, or a surface of a pore of the partition wall 120.

Subsequently, an undercoating agent 200 is applied to the ceramic honeycomb structure 100 as illustrated in Figure 2. The applied undercoating agent 200 covers the surface of the ceramic honeycomb structure 100 having the microcrack 100MC.

The undercoating agent 200 is an emulsion containing a liquid and an organic polymer dispersoid 200P used as a dispersoid dispersed in this liquid and having an average particle size of 0.1 to 0.8 $\mu$m. The undercoating agent can be what is called an emulsion-based adhesive or a latex-based adhesive. The average particle size of the organic polymer dispersoid is preferably 0.1 to 0.4 $\mu$m, and more preferably 0.1 to 0.2 $\mu$m.

Examples of the liquid include water, hexane, acetone and chloroform.

An example of the organic polymer dispersoid includes a rubber. Examples of the rubber include styrene butadiene rubber (SBR), butadiene rubber (BR), isoprene rubber (IR), chloroprene rubber (CR), nitrile rubber (NBR), butyl rubber (IIR), ethylene propylene rubber (EPDM), and natural rubber (NR).

Alternatively, the organic polymer dispersoid can be an organic polymer excluding the rubber, such as an acrylic resin (a polymer of acrylate or methacrylate), or an ethylene-vinyl acetate copolymer resin.

An end of the organic polymer can be substituted by a specific functional group to obtain a modified product capable of reacting with a specific substance (of a monomer or the like), and thus, the physical properties of the undercoating agent can be controlled.

Examples of the modified product include an epoxy-modified product, a carboxyl-modified product, an isocyanate-modified product and a hydrogen-modified product. Alternatively, the modification may be a graft-modified product. A carboxyl-modified product is preferably used because it can stabilize the zeta potential of the organic polymer dispersoid in the emulsion to be negative, and can be easily produced.

The average particle size of the organic polymer dispersoid can be a value of D50 in a volume-based particle size distribution measured with a laser diffraction particle size analyzer.

The pH of the undercoating agent can be 5 to 9.

The zeta potential of the organic polymer dispersoid in the emulsion is preferably negative. The zeta potential of a catalyst or a material of a catalyst supporting layer in the liquid is negative in many cases, and hence, if the zeta potential of the organic polymer dispersoid in the emulsion is negative, a catalyst or a catalyst supporting agent can be directly supported on the ceramic so as not to cover the organic polymer in a catalyst supporting step described later. Accordingly, even after removing the organic polymer by burning, the catalyst is difficult to peel off.

The undercoating agent can contain an additive such as an emulsifier (a surface active agent). Examples of the emulsifier include an anionic surface active agent, a nonionic surface active agent, a cationic surface active agent, an amphoteric surface active agent, and a dispersion stabilizer. From the viewpoint of obtaining a negative zeta potential of the emulsion, the emulsifier is preferably a negatively charged anionic surface active agent.

Examples of the anionic surface active agent include rosinates such as potassium rosinate and sodium rosinate; fatty acid salts such as potassium oleate, potassium laurate, sodium laurate, sodium stearate and potassium stearate; sulfuric acid ester salts of aliphatic alcohols such as sodium lauryl sulfate; alkyl allyl sulfonates such as sodium dodecylbenzene sulfonate; and phosphate esters such as lauryl phosphoric acid, sodium lauryl phosphate and potassium lauryl phosphate. A plurality of emulsifiers can be used in combination.

Examples of a method for applying the undercoating agent to the ceramic honeycomb structure include a dipping method, a brush coating method, an air spraying method, and a rolled coating method. An application amount of the undercoating agent can be controlled so that an application amount of the organic polymer dispersoid can be 1 to 20 g per apparent unit volume of 1 L of the ceramic honeycomb structure. The application amount of the organic polymer dispersoid can be easily controlled by controlling the concentration of the organic polymer dispersoid in the undercoating agent, the viscosity of the undercoating agent or the like. The application amount can be easily checked by measuring the mass of the ceramic honeycomb structure after the application and drying and the mass of the ceramic honeycomb structure before the application.

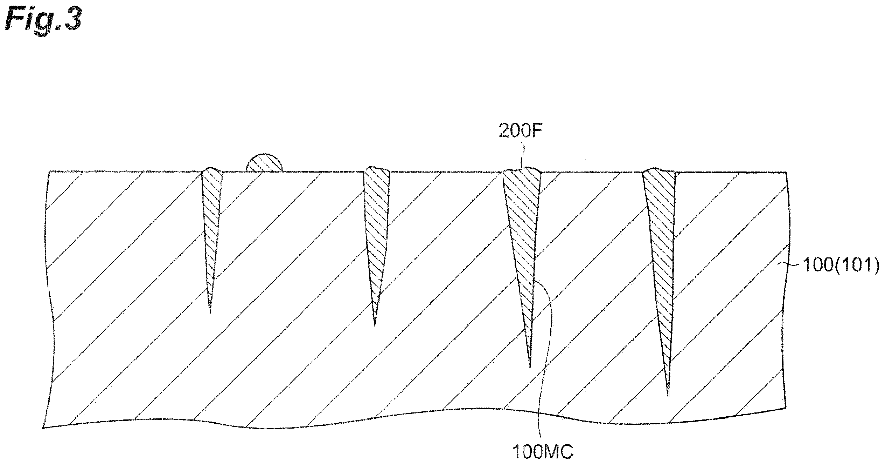

Subsequently, the undercoating liquid is dried to remove the liquid. Thus, the organic polymer dispersoid is aggregated/fused within the microcrack 100MC of the ceramic honeycomb structure 100 so as to form a film-shaped organic polymer portion 200F as illustrated in Figure 3. In this manner, a honeycomb filter intermediate 101 is completed. The applied organic polymer dispersoid is not entirely formed into the organic polymer portion 200F within the microcrack, but a part of the dispersoid may form a block-shaped organic polymer portion on the ceramic surface out of the microcrack.

According to the present embodiment, since the organic polymer portion 200F is suitably filled in the microcrack 100MC, the four-point bending strength of the honeycomb filter intermediate 101 can be increased. Accordingly, damage of the honeycomb filter intermediate 101 can be inhibited in a catalyst supporting step subsequently performed.

Specifically, the four-point bending strength can be 0.70 MPa or more, and is preferably 0.90 MPa or more. The four-point bending strength can be measured by a four-point bending test performed at room temperature in accordance with JIS R1601.

In the honeycomb filter intermediate 101, a volume occupancy of the organic polymer portion 200F in the microcrack 100MC can be 2 to 100%, and is preferably 50 to 100%.

Besides, since the organic polymer portion 200F in the microcrack 100MC functions as an adhesive, the strength of the honeycomb filter intermediate can be increased.

Furthermore, when the emulsion is dried, the organic polymer dispersoid 200P is aggregated/fused, and therefore, the surface of the ceramic honeycomb structure is not uniformly coated but can be easily non-uniformly coated with the organic polymer, so that the surface of the partition wall 120 can be easily exposed. Accordingly, a catalyst supporting agent or a catalyst can be selectively supported not on the organic polymer but on the ceramic surface of the ceramic honeycomb structure in the catalyst supporting step described later. On the contrary, if a water-soluble polymer is used as an undercoating agent, an organic polymer is uniformly formed on the ceramic surface, and hence, a catalyst can easily peel off when the organic polymer is removed by burning after the catalyst supporting step.

Besides, if the organic polymer dispersoid is a rubber, the elasticity of the honeycomb filter intermediate can be further increased. Thus, an effect of improving physical shock absorption of the honeycomb filter intermediate is obtained.

(Process for Producing Honeycomb Filter)

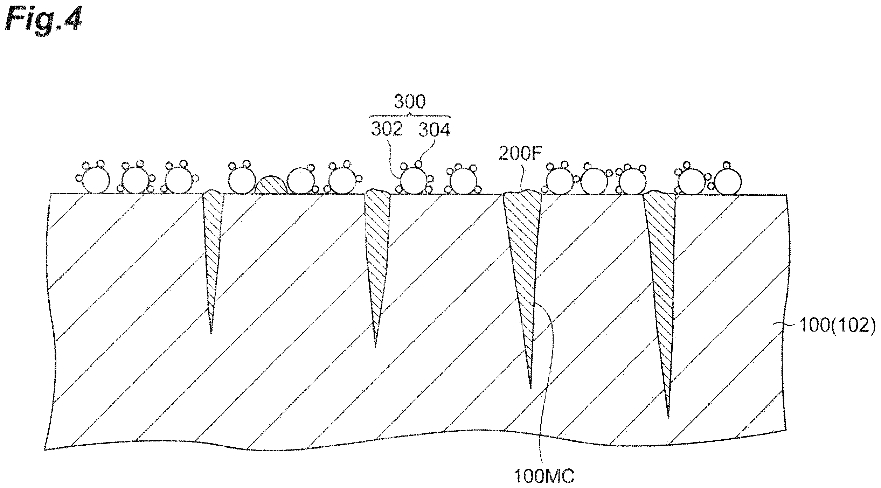

Subsequently, as illustrated in Figure 4, a catalyst is supported on the honeycomb filter intermediate 101. An example of a supporting method includes a method in which a catalyst supporting agent 302, which is designated as a wash coat and may sometimes function as a promoter, is first formed on the surface of the honeycomb filter intermediate 101, and then a catalyst 304 is supported on the catalyst supporting agent 302. Alternatively, the catalyst 304 may be directly supported on the honeycomb filter intermediate 101 without forming the catalyst supporting agent 302.

Examples of the catalyst supporting agent 302 include oxides such as alumina, silica, magnesia, titania, zirconia, ceria, $La_2O_3$, BaO and zeolite, or a composite oxide containing at least one of these. The catalyst supporting agent 302 can be formed by applying, to the honeycomb filter intermediate 101, a slurry containing a particle of any of the oxides and a liquid, drying the liquid and subjecting the resultant to a heat treatment if necessary.

The particle of the oxide in the slurry may precedently support a catalyst thereon. An example of the catalyst includes a particle of at least one metal element selected from the group consisting of Pt, Pd, Rh, silver, vanadium, chromium, manganese, iron, cobalt, nickel and copper, or a zeolite catalyst. If the particle of the oxide does not support such a catalyst thereon, a catalyst can be supported on the catalyst supporting agent after wash coating. As an example of a method for supporting a catalyst, a slurry containing a catalyst and a liquid is applied, the liquid is dried and the resultant is subjected to a heat treatment if necessary.

In this manner, a catalyst layer 300 containing the catalyst supporting agent 302 and the catalyst 304 is imparted to the surface of the honeycomb filter intermediate 101 as illustrated in Figure 4.

(Heat Treatment Step)

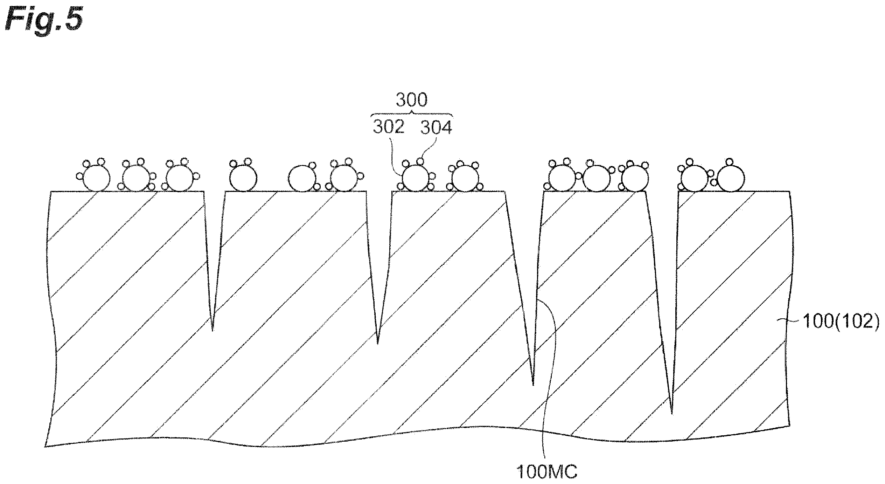

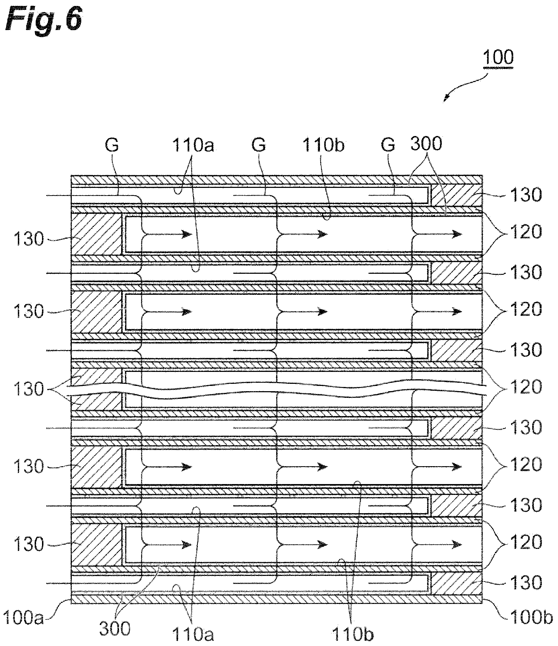

Subsequently, as illustrated in Figure 5, the organic polymer portion 200F filled in the microcrack 100MC is burnt by heat-treating this honeycomb filter intermediate 101 under an oxidizing atmosphere such as air at 400°C or more, and thus, the inside of the microcrack 100MC is restored to be void. In this manner, a honeycomb filter 102 supporting the catalyst layer 300 thereon and retaining the volume of the microcrack 100MC is completed. The heat treatment performed in the step of supporting the catalyst may be performed also as the heat treatment for burning the organic polymer. In this manner, a honeycomb filter 104 having the catalyst layer 300 on the surface of the honeycomb structure as illustrated in Figure 6 is completed.

A porosity of the honeycomb filter after supporting the catalyst can be 10 to 40%. From the viewpoint of retaining the pressure drop performance and improving the catalyst performance, the porosity of the honeycomb filter is preferably in the range of 15 to 35%.

Besides, occupancy of the catalyst and the catalyst supporting agent in the volume of the microcrack 100MC can be lower than 50% after supporting the catalyst.

According to the present embodiment, since the undercoating agent is precedently applied to the ceramic honeycomb structure, a catalyst and a catalyst supporting material can be inhibited from being filled in a microcrack in the catalyst supporting step. Accordingly, the volume of the microcrack can be easily retained also after supporting the catalyst. Therefore, even though a honeycomb filter has a catalyst supported thereon, the coefficient of thermal expansion (coefficient of linear expansion) can be suppressed to be as low as, for example, $3.0 \times 10^{-6}$/K or less, and hence, thermal shock resistance and the like can be improved. The lower limit of the coefficient of thermal expansion can be, for example, 0/K.

Examples

(Example 1A)

First, a ceramic honeycomb structure was prepared. This honeycomb structure was a column having a diameter of 16.3 cm and a length of 14.0 cm, and had a cell density of 59 cells/cm$^2$. Each channel was in a hexagonal shape. The ceramic material was $Al_{2(1-x)}Mg_xTi_{(1+y)}O_{5-2x+2y}$, wherein x = 0.12 and y = 0.12. The porosity was 59%.

As an undercoating agent, an aqueous emulsion of Nalstar SR-107, Nippon A & L Inc. (carboxy-modified styrene butadiene rubber latex (emulsion)) was prepared.

(Measurement of Average Particle Size of Organic Polymer Dispersoid in Undercoating Agent)

A laser diffraction particle size analyzer (Microtrack HRA (Model: 9320-X100) (Nikkiso Co., Ltd.)) was used for measuring a volume-based cumulative particle size distribution to obtain a value of D50.

The measurement was performed as follows: About 0.2 g of a sample was dropped onto a measurement section of the analyzer to be diluted with a solvent liquid. A 0.2% sodium hexametaphosphate solution was used as the solvent liquid, and ultrasonic waves were applied at 40 W for 30 seconds for dispersion. A refractive index of 1.54 was employed. The average particle size of the rubber dispersoid was 0.17 $\mu$m.

(Measurement of Zeta Potential of Organic Polymer Dispersoid in Emulsion)

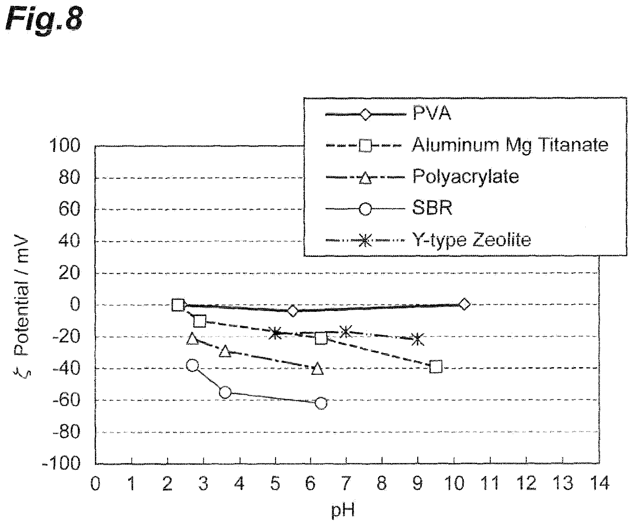

A zeta potential was measured as described below. The measurement results are shown in Table 1 and Figure 8.

After reducing the concentration of the emulsion appropriately by dilution, the resultant was adjusted for pH with nitric acid or ammonia water. Each sample liquid thus adjusted for pH was subjected to the measurement of a zeta potential by electrophoretic light scattering using Zetasizer Nano ZS (Malvern Instruments Ltd.).

(Undercoating)

The undercoating agent was applied to the ceramic honeycomb structure by the dipping method. During the application, air was allowed to pass through the filter so as not to occlude pores with the undercoating agent. The application amount of the undercoating agent was set so that an adhesion amount of the organic polymer dispersoid could be 6 g per apparent unit volume of the honeycomb structure. Thereafter, the undercoating agent was dried in hot air at 100°C, and thus, a honeycomb filter intermediate was obtained.

(Change in Pore Distribution)

Pore size distributions in the honeycomb structure before the undercoating and the honeycomb filter intermediate were measured by a mercury intrusion method using "Poremaster" manufactured by Quantachrome Instruments. Specifically, a small piece having a diameter of 9 mm and a length of 50 mm was cut out from the honeycomb intermediate. Mercury was intruded thereinto to measure volumes of pores in a range of 0.005 to 200.0 $\mu$m, so as to obtain a cumulative pore volume $V_{total}$ (ml/g) and an average pore diameter ($\mu$m). On the basis of the obtained cumulative pore volume $V_{total}$, the porosity of the honeycomb structure was obtained in accordance with the following equation (1):

$$\text{Porosity (\%)} = 100 \times (1 - 1/(1 + V_{total} \times D)) \quad \ldots (1)$$

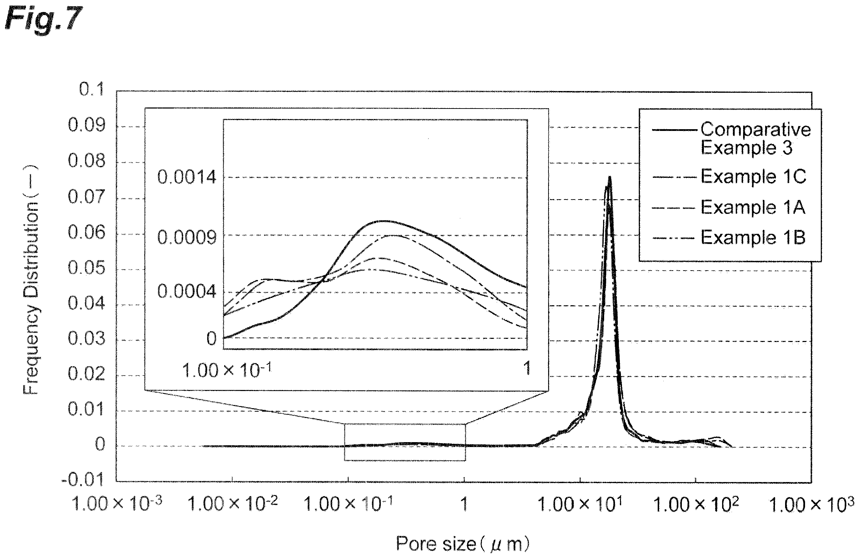

In the equation (1), D represents the density (g/cm$^3$) of the ceramic, and the density of generally used aluminum titanate, 3.7 g/cm$^3$, was used as D. The volume of the microcrack was defined as a volume $V_{0.1-2}$ of pores having a pore size in the range of 0.1 to 2 $\mu$m. The result is illustrated in Figure 7.

A ratio of the volume of the microcrack in the volume of all the pores in the honeycomb structure before the undercoating was 1.07%, and a ratio of the volume of the microcrack in the volume of all the pores in the honeycomb filter intermediate was 0.49%. Accordingly, in the honeycomb filter intermediate, 54.2% of the microcrack before the undercoating was occupied by the organic polymer.

(Bending Strength of Honeycomb Filter Intermediate)

A TENSILON universal RTG series tester (Model: RTG-1310) (A&D Company, Limited) and a four-point bending test jig (a distance between four-point bending fulcrums of 30 mm, and a span between four-point bending punches of 10 mm) were used. A test speed was set to 0.5 mm/min with a moving speed constantly controlled. A sample was in a shape having a length of 45 mm and a cross-section with a width of 9 mm and a height of 8 mm (including 6 x 6 cells). The sample was surface-treated with #100 sandpaper until a vertical wall between cells was eliminated. The number n of measured samples was 3.

(Catalyst Supporting Step)

A catalyst was supported on the honeycomb filter intermediate as follows. First, the honeycomb filter intermediate was immersed in an aqueous slurry containing 25% by weight of a zeolite catalyst (ZSM-5) for 2 minutes. Thereafter, an excessive portion of the slurry was removed by air blowing, and the resultant was dried at 120°C for 1 hour.

(Step of Burning Organic Polymer through Heat Treatment)

The honeycomb filter intermediate in which the slurry had been dried was heated in air at 500°C for 1 hour in an electric furnace to obtain a honeycomb filter.

(Measurement of Coefficient of Thermal Expansion (CTE) after Supporting Catalyst and Heat Treatment)

The coefficient of thermal expansion of the honeycomb filter was measured to be found as 2.7 $\times$ 10$^{-6}$/K. The conditions and the result are shown in Table 1. The coefficient of thermal expansion was measured as follows: First, a cylindrical small piece having a length of 20 mm and a radius of 7 mm was cut out from the honeycomb filter. A thermomechanical analyzer (TMA 6300 manufactured by SII Technology Inc.) was used for measuring the coefficient of thermal expansion of the small piece in a temperature range of 40 to 800°C while increasing the temperature from room temperature (25 °C) to 1000°C at 600°C/h.

[Table 1]

| | Example 1A | Example 1B | Example 1C | Example 2 | Comparative Example 1 | Comparative Example 2 | Comparative Example 3 |
|---|---|---|---|---|---|---|---|
| Type of Undercoating Agent | Aqueous Emulsion | | | Aqueous Emulsion | Aqueous Emulsion | Aqueous Solution | - |
| Organic Polymer Dispersoid/Solute | SBR | | | Polyacrylate | EVA | PVA | - |
| Average Particle Size of Organic Polymer Dispersoid/Molecular Weight of Solute | 0.17 $\mu$m | | | 0.12 $\mu$m | 0.9 $\mu$m | about 22000 (degree of polymerization 500) | - |
| Application Amount of Organic Polymer Dispersoid per Apparent Volume of Honeycomb Structure [g/L] | 6 | 8 | 4 | 6 | 6 | 6 | - |
| Ratio in volume of Microcrack to All Pores after Undercoating [%] | 0.49 | 0.37 | 1.04 | 0.57 | - | 0.92 | 1.07 no undercoating |
| Occupancy of Organic Polymer in Volume of Microcrack after Undercoating [%] | 54.2 | 65.4 | 2.80 | 50.2 | - | 14.0 | - |
| Four-point Bending Strength of Honeycomb Structure after Undercoating [MPa] | 0.91 | 1.21 | 0.84 | 0.89 | - | 1.69 | 0.61 |
| Coefficient of Thermal Expansion of Honeycomb Filter after Supporting Catalyst and Heat Treatment [$10^{-6}$/K] | 2.7 | 2.3 | 2.9 | 2.9 | 3.4 | 3.1 | 3.8 |
| Zeta Potential of Dispersoid or Solute in Undercoating Agent (mV) | -62 (pH = 6) | | | -40 (pH = 6) | - | -4 (pH = 5) | - |

(Example 1B)

This example was performed in the same manner as Example 1A except that the application amount of the undercoating agent was changed so that the organic polymer dispersoid could be adhered in an amount of 8 g per apparent unit volume of the honeycomb structure. The ratio of the volume of the microcrack in the volume of all pores in the honeycomb filter intermediate was 0.37%. Accordingly, in the honeycomb filter intermediate, 65.4% of the microcrack before the undercoating was occupied by the organic polymer.

(Example 1C)

This example was performed in the same manner as Example 1A except that the application amount of the undercoating agent was changed so that the organic polymer dispersoid could be adhered in an amount of 4 g per apparent unit volume of the honeycomb structure. The ratio of the volume of the microcrack in the volume of all pores in the honeycomb filter intermediate was 1.04%. Accordingly, in the honeycomb filter intermediate, 2.80% of the microcrack before the undercoating was occupied by the organic polymer.

(Example 2)

This example was performed in the same manner as Example 1A except that an aqueous emulsion, EKA FLOW L260N (polyacrylate emulsion), was used as the undercoating agent. The average particle size of a polyacrylate dispersoid was 0.12 $\mu$m. A refractive index of 1.51 was employed.

(Comparative Example 1)

This example was performed in the same manner as Example 1A except that an ethylene-vinyl acetate emulsion (EVA) was used as the undercoating agent. The average particle size of an ethylene-vinyl acetate copolymer dispersoid was 0.9 $\mu$m.

(Comparative Example 2)

This example was performed in the same manner as Example 1A except that a polyvinyl alcohol (PVA) aqueous solution was used as the undercoating agent. The molecular weight of polyvinyl alcohol was about 22000, and the degree of polymerization thereof was about 500.

(Comparative Example 3)

This example was performed in the same manner as Example 1A except that no undercoating agent was used.
Figure 7 illustrates pore size distributions in the honeycomb filter intermediates of Comparative Example 3 and Examples 1A to 1C after the undercoating and before supporting the catalyst. It is understood that the volume of pores having a size of 0.1 to 2 $\mu$m that belong to the microcrack is lower in each of the Examples than in Comparative Example 3.
The surface of each honeycomb filter intermediate after the undercoating and before supporting the catalyst was observed with an SEM, resulting in finding, in each of the Examples, that the organic polymer was non-uniformly distributed and that the surface of the ceramic was exposed in many portions. On the other hand, in Comparative Example 2, the film of the PVA was uniformly formed on the surface of the ceramic. In Comparative Example 1, although the polymer was unevenly distributed, the surface of the ceramic was exposed merely in a few portions.
The surface of each honeycomb filter after supporting the catalyst and before burning the organic polymer through the heat treatment was observed with an SEM, resulting in finding, in each of the Examples, that the catalyst supporting agent was supported selectively in portions excluding portions where the organic polymer was present.
Figure 8 illustrates measurement results of zeta potentials of an aluminum magnesium titanate powder used as a material powder of the ceramic honeycomb structure of Example 1A, the PVA (polyvinyl alcohol), the SBR dispersoid in the undercoating agent of Examples 1A to 1C, the polyacrylate dispersoid in the undercoating agent of Example 2, and Y-type zeolite in water.
As represented by the Y-type zeolite, many of oxides used as the catalyst supporting agent have a negative zeta potential. Accordingly, if the organic polymer in the undercoating agent has a negative potential, it is regarded that the catalyst supporting agent is supported on the honeycomb filter intermediate so as not to cover the organic polymer.

**Reference Signs List**

100 ... ceramic honeycomb structure, 100MC ... microcrack, 101 ... honeycomb filter intermediate, 102 ... honeycomb filter, 200 ... undercoating agent, 200P ... organic polymer dispersoid, 200F ... organic polymer portion, 300 ... catalyst layer, 302 ... catalyst supporting agent, 304 ... catalyst.

**Claims**

1. A process for producing a honeycomb filter intermediate, comprising a step of applying an undercoating agent to a ceramic honeycomb structure,
   wherein the undercoating agent is an emulsion comprising a liquid and an organic polymer dispersoid dispersed in the liquid and having an average particle size of 0.1 to 0.8 $\mu$m.

2. The process according to claim 1, wherein the organic polymer dispersoid is a rubber.

3. The process according to claim 1, wherein the organic polymer dispersoid is an acrylic resin.

4. The process according to any one of claims 1 to 3, wherein a zeta potential of the organic polymer dispersoid in the emulsion is negative.

5. A honeycomb filter intermediate, comprising:

   a ceramic honeycomb structure; and
   an organic polymer held on a surface of the ceramic honeycomb structure,
   wherein a part of the organic polymer is present in a microcrack of the ceramic honeycomb structure, and
   the organic polymer is a rubber or an acrylic resin.

6. The honeycomb filter intermediate according to claim 5, wherein four-point bending strength is 0.70 MPa or more.

7. The honeycomb filter intermediate according to any one of claims 5 and 6, wherein an amount of the organic polymer is 1 to 20 g per apparent unit volume of 1 L of the ceramic honeycomb structure.

8. The honeycomb filter intermediate according to any one of claims 5 to 7, wherein the ceramic honeycomb structure comprises an aluminum titanate-based ceramic.

9. A process for producing a honeycomb filter, comprising:

   a step of causing a catalyst and/or a catalyst supporting agent to be supported on a surface of the ceramic honeycomb structure of the ceramic honeycomb intermediate according to any one of claims 5 to 8; and
   a step of removing the organic polymer from the surface of the ceramic honeycomb structure by heating the honeycomb filter.

10. A honeycomb filter, comprising:

    a ceramic honeycomb structure comprising an aluminum titanate-based ceramic; and
    a catalyst and/or a catalyst supporting agent supported on a surface of the ceramic honeycomb structure,
    wherein a coefficient of thermal expansion of the honeycomb filter is $3.0 \times 10^{-6}$/K or less.

11. The honeycomb filter according to claim 10, wherein the aluminum titanate-based ceramic is represented by the following composition formula:

    $$Al_{2(1-x)}Mg_xTi_{(1+y)}O_{5-2x+2y}$$

    wherein x satisfies $0 < x < 1$, and y satisfies $0.5x < y < 3x$.

*Fig.1*

Fig.2

Fig.3

200F

100(101)

100MC

Fig.4

Fig.5

## Fig.6

# Fig.7

EP 3 150 268 A1

# Fig.8

**INTERNATIONAL SEARCH REPORT**

| International application No. |
| --- |
| PCT/JP2015/065666 |

A. CLASSIFICATION OF SUBJECT MATTER
*B01D39/20*(2006.01)i, *B01D53/86*(2006.01)i, *B01D53/90*(2006.01)i, *B01J29/40*
(2006.01)i, *B01J35/04*(2006.01)i, *C04B38/00*(2006.01)i, *C04B41/89*(2006.01)i,
*F01N3/02*(2006.01)i, *F01N3/022*(2006.01)i

According to International Patent Classification (IPC) or to both national classification and IPC

B. FIELDS SEARCHED

Minimum documentation searched (classification system followed by classification symbols)
B01D39/20, B01D53/86, B01D53/90, B01J29/40, B01J35/04, C04B38/00,
C04B41/89, F01N3/02, F01N3/022

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2011-240316 A  (Sumitomo Chemical Co., Ltd.),<br>01 December 2011 (01.12.2011),<br>claims; paragraphs [0013] to [0026], [0036] to<br>[0053]<br>(Family: none) | 5-9<br>1-4,10-11 |
| X<br>A | JP 2012-55802 A  (Sumitomo Chemical Co., Ltd.),<br>22 March 2012 (22.03.2012),<br>paragraph [0023]; example 1<br>(Family: none) | 10-11<br>1-9 |
| X<br>A | WO 2011/007852 A1  (Sumitomo Chemical Co.,<br>Ltd.),<br>20 January 2011 (20.01.2011),<br>page 16, line 21 to page 16, line 27; example 1<br>& US 2012/0175825 A1     & EP 2455354 A1<br>& CN 102471163 A         & KR 10-2012-0046116 A | 10<br>1-9,11 |

| ☒ | Further documents are listed in the continuation of Box C. | ☐ | See patent family annex. |
| --- | --- | --- | --- |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    17 July 2015 (17.07.15) | Date of mailing of the international search report<br>    28 July 2015 (28.07.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2015/065666 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2012/046577 A1  (Otsuka Chemical Co., Ltd.), 12 April 2012 (12.04.2012), claims; paragraphs [0073] to [0076], [0140] & JP 5587420 B          & US 2013/0171036 A1 & EP 2626132 A1          & CN 103153465 A | 11 |
| A | JP 2005-46667 A  (Ohcera Co., Ltd.), 24 February 2005 (24.02.2005), claims & US 2006/0239880 A1     & WO 2005/009918 A1 & EP 1652830 A1          & CA 2533387 A & KR 10-2006-0095877 A   & KR 10-1154903 B & CN 1812945 A | 1-11 |
| A | JP 62-8210 B2  (Nippon Soken, Inc.), 21 February 1987 (21.02.1987), page 4, line 16 to page 4, line 37; examples 1, 2 & US 4451517 A | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009513338 A